# FASCICULE DE BREVET EUROPEEN

(11) **EP 2 240 335 B1**
(45) Date de publication et mention de la délivrance du brevet: **29.06.2011**
(21) Numéro de dépôt: 09705659.2
(22) Date de dépôt: 08.01.2009
(51) Int. Cl.: B60C 11/12

(54) **PNEUMATIQUE**
PNEUMATISCHER REIFEN
PNEUMATIC TIRE

(30) Priorité: 09.01.2008 FR 0850107
(43) Date de publication de la demande: 20.10.2010
(73) Titulaire: Société de Technologie MICHELIN, 63000 Clermont-Ferrand (FR); MICHELIN Recherche et Technique S.A., 1763 Granges-Paccot (CH)
(72) Inventeur: BERVAS, Patrick, F-63000 Clermont-Ferrand (FR); FAURE, Jean-Claude-John, F-63200 Mozac (FR); TAKANO, Hideaki, Gunma 373-8668 (JP); GREVERIE, Ludovic, Ota-Gunma 373-8668 (JP)
(74) Mandataire: Diernaz, Christian
(86) Numéro de dépôt international: PCT/EP2009/050182
(87) Numéro de publication internationale: WO 2009/095288

(56) Documents cités:
- EP-A- 0 625 436
- EP-A- 0 917 970
- EP-A- 0 989 000
- WO-A-02/38399
- WO-A-2007/114430
- FR-A- 2 763 892
- US-A1- 2002 166 613

## Description

L'invention concerne les pneus et plus particulièrement les bandes de roulement de tels pneus pourvus de moyens pour réduire de façon sensible le bruit en roulage.

Un pneu ayant les caractéristiques techniques du préambule de la revendication 1 est connu du document FR-A-2763892. De façon usuelle, les pneus pour véhicule de tourisme sont pourvus d'une armature de carcasse qui est aujourd'hui radiale en grande majorité ; dans cette configuration, les renforts de l'armature de carcasse sont disposés de façon à faire un angle supérieur ou égal à 80 degrés avec la direction circonférentielle (ce qui revient à dire que les renforts sont soit contenus dans un plan méridien (plan contenant l'axe de rotation), ou font avec ce plan méridien une inclinaison d'au plus 20 degrés.

De façon usuelle, ces pneus sont pourvus d'une armature de sommet comportant une pluralité de renforts noyés dans un matériau à base d'élastomères. Cette armature de sommet est recouverte radialement à l'extérieur par une bande de roulement en matériau caoutchoutique, cette bande ayant une surface, dite surface de roulement, destinée à être en contact avec la route pendant le roulage.

Afin d'assurer un niveau de sécurité indispensable par temps de pluie notamment, il est connu de pourvoir la bande de roulement avec une pluralité de rainures d'orientation générale circonférentielle (ou longitudinale) et de rainures d'orientation générale transversale (parallèles à ou faisant un angle faible avec l'axe de rotation).

Un inconvénient de la présence de rainures longitudinales est la génération de vibrations de l'air circulant dans ces rainures notamment dans le contact avec la route. Ces vibrations sont la source de résonances générant un bruit en roulage.

La publication de demande de brevet JP-01-191734 s'intéresse à ce phénomène et propose de réduire le bruit généré par l'air vibrant à l'intérieur de ces rainures en formant dans l'épaisseur de la bande de roulement d'un pneu pour véhicule poids lourd des cavités sphériques débouchant par un canal de section réduite dans une rainure longitudinale. Par ce moyen, il est possible de mettre en oeuvre une sorte de résonateur fonctionnant sur le principe d'un résonateur de Helmhotz. En effet, une telle cavité par son volume, précisément déterminé, joue ce rôle et permet de réduire l'effet de certaines des fréquences de vibration de l'air circulant dans les rainures lors du passage dans le contact avec la chaussée. Pour chaque fréquence choisie, le volume de ces cavités doit être approprié : l'application aux pneus pour véhicule poids lourd est possible puisque, en règle générale, l'épaisseur des éléments de la bande de roulement est importante comparée à celle des bandes de roulement de pneus pour véhicules de tourisme.

Pour un véhicule de tourisme, l'épaisseur de bande de roulement étant faible (c'est-à-dire inférieure à 10 mm), il devient impératif de mettre ces résonateurs le plus loin possible de la surface de roulement de la bande de roulement et plus particulièrement à une profondeur supérieure à la profondeur des rainures, ou à tout le moins à la profondeur desdites rainures diminuée de la quantité légalement imposée (signalée par les témoins d'usure qui sont des plots de gomme prévus au fond des rainures et dont la surface radialement à l'extérieur indique la limite d'usure de la bande à ne pas dépasser afin de conserver un niveau de sécurité satisfaisant). Si dans le cas de pneus pour poids lourd tels que décrits dans JP-01-191734, il semble possible de mouler et de démouler un pneu avec les éléments de moule moulant les cavités hémisphériques, ces cavités se raccordant aux rainures, cela devient difficile avec des pneus pour véhicules de tourisme ne serait-ce que par la longueur importante de ces cavités (longueur nécessitée par le volume nécessaire).

Un autre inconvénient de JP-01-191734 réside dans le fait que la cavité sphérique de volume important peut affecter la façon dont l'élément de gomme qui la contient va s'écraser contre le sol pendant le roulage et notamment la répartition des pressions de contact. Par ailleurs, les cavités de JP-01-191734 ne présentent pas une pérennité satisfaisante puisque après une usure partielle de la bande, ces cavités débouchent sur la surface de roulement : le volume n'est plus conservé et le fonctionnement en tant que résonateur s'en trouve perturbé.

C'est pourquoi il a été recherché une nouvelle disposition de cavités dans une bande de roulement de pneu qui soit à la fois quasiment insensible à l'usure de la bande, qui puisse être facilement moulée et démoulée, tout en assurant une maîtrise parfaite du volume de chaque cavité afin de pouvoir jouer pleinement le rôle de résonateur à une fréquence fixée. Par quasiment insensible, on entend que le volume des cavités est inchangés jusqu'à ce que l'usure de la bande atteigne les 2/3 de l'épaisseur de ladite bande.

Dans ce but, il est proposé un pneu comportant une partie de sommet prolongée axialement de part et d'autre par des flancs, cette partie de sommet comprenant une armature de renforcement formée d'une pluralité de renforts noyés dans un matériau caoutchoutique, cette armature de renforcement étant radialement surmontée par une bande de roulement dont une surface radialement à l'extérieur forme une surface de roulement destinée à venir en contact avec la route pendant le roulage du pneu. Cette bande de roulement comprend une pluralité de rainures d'orientation générale circonférentielle et de profondeur **H,** ces rainures délimitant une pluralité d'éléments de gomme disposés dans la direction circonférentielle. Au moins un élément de la bande de roulement comprend une pluralité de cavités, chaque cavité de volume **Vc** étant de forme générale allongée de longueur totale **Lc,** chaque cavité étant prévue pour déboucher dans une seule rainure d'orientation générale circonférentielle, chaque cavité étant prolongée sur toute sa longueur **L** par une incision s'étendant radialement vers l'extérieur pour déboucher sur la surface de roulement.

Ce pneu est caractérisé en ce que l'incision comprend une portion d'incision prenant naissance sur la cavité et faisant un angle **A** d'au moins 10 degrés avec une perpendiculaire à la surface de roulement et passant par le point d'intersection de l'incision avec la cavité, de manière à ce que l'incision se ferme au moins à proximité de la cavité afin de réaliser la conservation du volume total **Vc** de ladite cavité pendant le passage de ladite cavité dans la région de contact avec la chaussée. Il est en effet primordial de conserver constant voire sensiblement constant le volume de chaque cavité afin d'obtenir effectivement un résonateur atténuateur des sons produits pour une fréquence donnée ou une gamme de fréquences donnée.

Selon l'invention, chaque cavité de longueur totale **Lc** se comporte comme un résonateur de Helmholtz et est formée d'une première partie de forme générale allongée de longueur totale **L** et de section moyenne **S** et d'une seconde partie formant un canal de longueur **1** et de section **s** inférieure à la section moyenne **S** de la première partie, cette seconde partie, se raccordant à la première partie, étant prévue pour déboucher dans une rainure d'orientation générale circonférentielle. Chaque cavité est prolongée sur toute sa longueur **Lc** par une incision s'étendant radialement vers l'extérieur pour déboucher sur la surface de roulement.

Préférentiellement le pneu selon l'invention est caractérisé en ce que la bande de roulement étant pourvue d'au moins un témoin d'usure dans le fond d'au moins une rainure, ce témoin d'usure ayant une hauteur **h** mesuré par rapport au fond de la rainure, chaque cavité comprend une génératrice supérieure située à une distance de la surface de roulement au moins égale à la profondeur des rainures diminuée de la hauteur **h** du témoin d'usure.

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 montre une vue partielle en élévation de la surface de roulement d'une première variante de bande de roulement selon l'invention ;

La figure 2-1 montre une coupe partielle selon la ligne I-I de la bande de roulement de la figure 1 ;

La figure 2-2 montre une coupe partielle selon la ligne II-II de la bande de roulement de la figure 1 ;

La figure 3-1 montre en coupe une variante d'une cavité de type résonateur de Helmholtz selon l'invention ;

La figure 3-2 montre en coupe la variante de la figure 3-1 sous l'action des pressions de contact avec la chaussée ;

La figure 4 montre une autre variante de bande de roulement selon l'invention ;

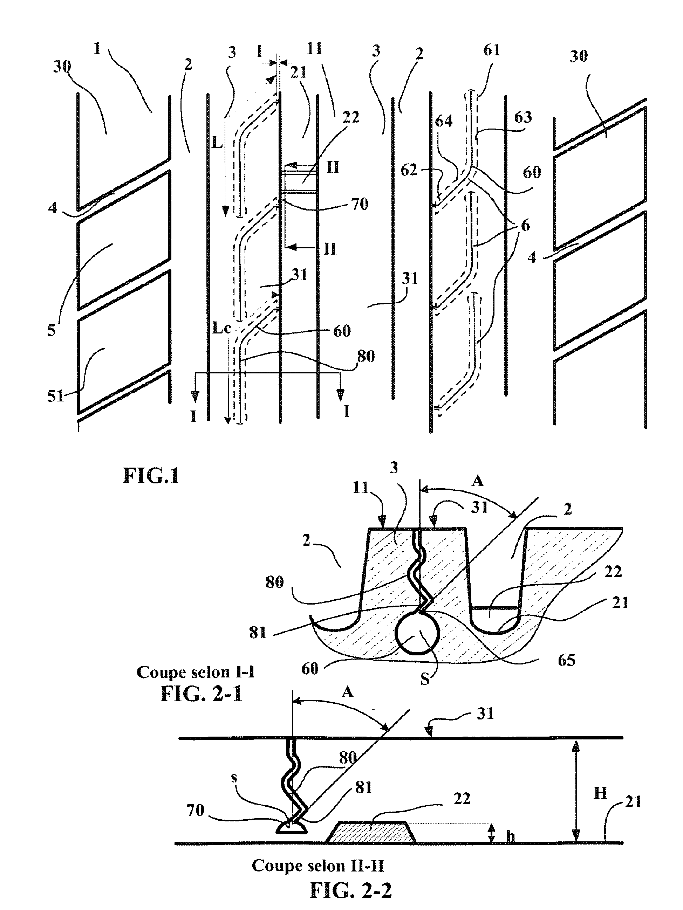

La bande de roulement 1 montrée dans une vue partielle en élévation avec la figure 1, comprend quatre rainures principales 2 d'orientation circonférentielle (c'est-à-dire longitudinale), ces rainures 2 ayant sensiblement une même profondeur moyenne H.

Ces rainures d'orientation circonférentielle délimitent trois nervures 3 ainsi que des parties de bord 30. Ces parties de bord de la bande de roulement sont pourvues de rainures transversales 4 obliques délimitant avec une rainure circonférentielle une pluralité de blocs 5. Les surfaces externes 31 des nervures et 51 des blocs visibles sur cette figure 1 forment une surface de roulement 11 destinée à venir en contact avec la chaussée pendant le roulage d'un pneu pourvu d'une telle bande.

Cette bande de roulement comprend en outre une pluralité de plots 22 de gomme formés par moulage sur le fond 21 des rainures circonférentielles 2 ; ces plots sont des dispositifs usuels servant à indiquer le niveau maximal d'usure de la bande de roulement à partir duquel il est nécessaire de changer de pneu. Un de ces plots 22 est montré en coupe sur la figure 2-2 : ce plot a une hauteur **h** mesurée par rapport au fond de la rainure 2 de profondeur **H.**

Sur la figure 1, on aperçoit une pluralité de cavités 6 formées pendant le moulage de la bande de roulement, ces cavités 6 sont de forme allongée et sont en totalité à l'intérieur de la bande de roulement. Chaque cavité 6, représentée en traits pointillés, forme un résonateur de Helmholtz de longueur totale **Lc** et est formée d'une première partie de cavité 60, d'une longueur totale **L** et de volume **V,** et d'une seconde partie de cavité 70 de section moyenne s et de longueur **1,** cette seconde partie 70, de section réduite par rapport à la section moyenne de la première partie de cavité 60, débouchant dans une rainure circonférentielle 2. La section moyenne **s** de cette seconde partie de cavité 70 est inférieure à la section moyenne **S** de la première partie de cavité 60. Les volumes respectifs des première et seconde parties de la cavité 6 sont déterminés de façon précise afin d'atténuer les résonances dans la rainure pour une fréquence déterminée fonction de la longueur de rainure dans le contact avec la chaussée qui est elle même une fonction de la charge supportée par le pneu et sa pression de gonflage. Par section, on entend ici l'aire de section transversale de la partie de cavité considérée.

Chaque première partie de cavité 60 comprend une partie circonférentielle 63 orientée dans la direction circonférentielle, cette partie étant terminée par un extrémité fermée 61, c'est-à-dire ne débouchant pas à l'air libre et une partie oblique 64 se terminant par une extrémité 62 ; cette partie oblique 64 est prolongée à une extrémité par la partie de cavité 70 de section réduite et débouchant dans une rainure 2.

Dans cette variante, toutes les cavités 60 formées sur une même nervure 3 débouchent dans une même rainure circonférentielle 2 et sont destinées à limiter les phénomènes de résonance dans ladite rainure lors du passage dans le contact avec la chaussée.

Chaque cavité 60, comme le montre la figure 2-1 (représentant une coupe selon la ligne 1-1 de la bande de la figure 1), présente une section transversale de forme circulaire de section **S** dont les points 65 de ladite section les plus à l'extérieur (dans la direction de la surface de roulement) sont à une distance **D** de la surface de roulement 11 qui est supérieure à la différence entre la profondeur **H** de la rainure 2 et la hauteur **h** du plot 22. De cette manière, il est possible de bénéficier d'un effet anti résonance pendant toute la durée d'usage de la bande de roulement. Toutefois, il pourrait être prévu que les cavités 60 apparaissent sur la surface de roulement après une usure au moins égale à 2/3 de l'épaisseur initiale de la bande de roulement. Ainsi, les cavités peuvent en fin d'usage former de nouvelles rainures ou à tout le moins former de nouvelles arêtes utiles pour augmenter l'accroche de la bande de roulement sur la chaussée.

Chaque cavité 6, formée de la première partie de cavité 60 et de la seconde partie de cavité 70 est prolongée sur toute sa longueur **Lc** par une incision 80 s'étendant radialement vers l'extérieur pour déboucher sur la surface de roulement 11 ; chaque incision 80 comprend une portion d'incision prenant naissance sur la cavité et, faisant un angle **A** d'au moins 10 degrés (dans le cas présent, l'angle **A** est égal à 15 degrés), avec une perpendiculaire à la surface de roulement et passant par le point d'intersection de l'incision 80 avec la cavité 6, de manière à ce que l'incision 80 se ferme au moins à proximité de la cavité afin de réaliser la conservation du volume total **V** de ladite cavité pendant le passage de ladite cavité 6 dans le contact avec la chaussée. Préférentiellement l'incision (80) a une largeur moyenne inférieure à 1 mm et encore plus préférentiellement inférieure à 0.6 mm. Grâce à cette caractéristique, il est possible d'assurer un effet anti bruit pour des fréquences choisies à l'avance.

Les premières parties de cavités 60 montrées ici ont une section circulaire : bien entendu, toute autre forme de section transversale peut être employée. De même toutes les cavités montrées sur cette première variante sont de caractéristiques géométriques sensiblement identiques : il est bien entendu possible pour la personne du métier d'adapter au mieux les dimensions des cavités pour régler le bruit généré par la circulation de l'air dans une rainure et celles d'autres cavités pour régler le bruit généré par la circulation de l'air dans une autre rainure. Les cavités débouchant dans une rainure peuvent être choisies de manières à ce que certaines d'entre elles soient efficaces pour une fréquence donnée et les autres cavités débouchant dans la même rainure soient efficaces pour une autre fréquence.

La figure 2-2 montre une coupe de la bande de roulement montrée à la figure 1 selon une ligne II-II. Sur cette figure, on distingue une paroi de matériau délimitant une rainure de profondeur H, cette rainure ayant un plot 22 de hauteur h (définissant une limite légale d'usure de la bande de roulement). On distingue également l'orifice de la seconde partie de cavité 70 débouchant dans la rainure. Cette seconde partie de cavité 70 a une section transversale s de forme circulaire tronquée dont la surface est inférieure à la moitié de la section transversale de la première partie de cavité 60. Cette seconde partie de cavité est prolongée dans la direction de la surface de roulement 31 par l'incision 80, le raccordement se faisant par la partie d'incision 81 faisant un angle **A** avec une perpendiculaire à la surface de roulement. Dans le cas présent, sensiblement tout le volume **Vc** de la cavité 6 (égal à la somme du volume de la première et du volume de la seconde partie de cavité) est radialement sous le niveau du témoin d'usure et par conséquent, dans cette variante ledit volume **Vc** n'est pas affecté par l'usure de la bande. Ceci permet de conserver le même volume de cavité pendant toute la durée d'usage du pneu et donc de rester efficace pour atténuer les bruits liés aux résonances dans les rainures.

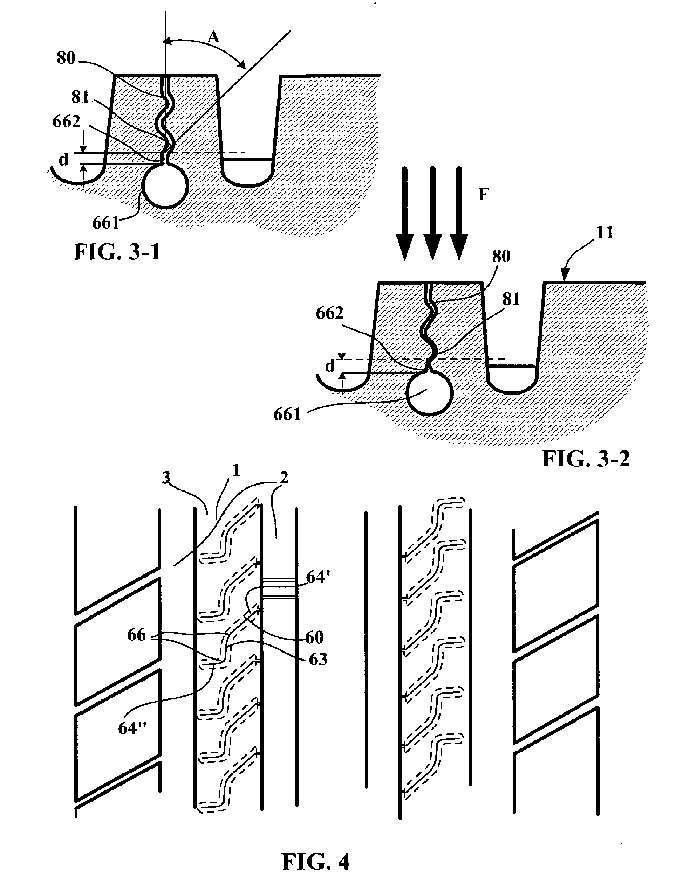

Industriellement, il peut être difficile de connecter une lame moulant la portion inclinée de l'incision avec un corps destiné à mouler une cavité, ce corps présentant une surface externe courbe ; pour faciliter la mise en oeuvre, on peut prévoir que la lame comprend une partie d'incision non inclinée se raccordant au corps de façon sensiblement perpendiculaire audit corps. Dans un tel cas, le volume utile total **Vc** de la cavité comprend en outre le volume de la partie non inclinée de l'incision comme le montre la figure 3-1. Sur cette figure 3-1 montrant une coupe transversale d'une variante de cavité, on distingue une partie de section circulaire 661 prolongée par une partie d'incision 662 non inclinée sur une hauteur **d.** Le volume utile de la cavité comprend ici le volume de la partie de section circulaire 661 auquel on ajoute le volume de la partie non inclinée d'incision 662. La partie non inclinée d'incision 662 est prolongée par l'incision 80 et notamment par une partie inclinée 81 faisant un angle **A** plus grand que 10 degrés. Sur la figure 3-2, on montre la même cavité lorsque la bande de roulement est soumise aux pressions de contact contre la chaussée. Sous l'action des pressions de contact (visualisées par les flèches **F**), la cavité de volume **Vc** est isolée puisque la partie d'incision inclinée 81 prolongeant ladite cavité se ferme et ainsi ledit volume **Vc** est maintenu constant.

Dans une autre variante montrée avec la figure 4, les cavités comprennent deux parties coudées 66 de manière à réaliser une occupation optimisée de la bande de roulement. Dans le cas présent, la première partie de la cavité 60 comprend deux parties d'orientation oblique 64, 64' positionnées de part et d'autre de la partie orientée dans la direction circonférentielle 63.

L'invention n'est pas limitée aux exemples décrits et représentés et diverses modifications peuvent y être apportées sans sortir de son cadre. Notamment la seconde partie de cavité 70 débouchant dans une rainure peut avoir une section de forme quelconque. Chaque résonateur peut être fait avec des dimensions spécifique intégrant notamment les déformations du matériau constituant la bande de roulement. On peut par ailleurs prévoir des résonateurs décalés en fréquence de façon à être liés par exemple aux pas des motifs de sculpture de la bande de roulement. De même ce qui a été présenté pour des pneus destinés à des véhicules de tourisme peut être appliqué à tout autre type de pneus et notamment ceux destinés à des véhicules poids lourd.

## Revendications

1. Pneu comportant une partie de sommet prolongée axialement de part et d'autre par des flancs, cette partie de sommet comprenant une armature de renforcement formée d'une pluralité de renforts noyés dans un matériau caoutchoutique, cette armature de renforcement étant radialement surmontée par une bande de roulement dont une surface radialement à l'extérieur forme une surface de roulement (11) et est destinée à venir en contact avec la route pendant le roulage du pneu, cette bande de roulement comprenant une pluralité de rainures d'orientation générale circonférentielle (2) et de profondeur **H,** ces rainures (2) délimitant une pluralité d'éléments de gomme (3, 30) disposés dans la direction circonférentielle, au moins un élément de gomme (3, 30) de la bande de roulement comprend une pluralité de cavités (6), chaque cavité (6) de volume **Vc** étant de forme générale allongée de longueur totale **Lc** prévue pour déboucher dans une seule rainure (2) d'orientation générale circonférentielle, chaque cavité (6) étant prolongée sur toute sa longueur **Lc** par une incision (80) s'étendant radialement vers l'extérieur pour déboucher sur la surface de roulement (11), ce pneu étant **caractérisé en ce que** ces cavités forment des résonateurs de Helmholtz, chacune desdites cavités comprenant une première partie (60) de longueur **L** et de section moyenne **S** et une seconde partie (70) formant un canal de longueur **1** et de section s inférieure à la section moyenne de la première partie, cette seconde partie (70) se raccordant à la première partie (60) et débouchant dans une rainure, le volume **Vc** de la cavité étant égal à la somme des volumes de la première partie (60) et de la seconde partie (70), et **en ce que** l'incision (80) comprend une portion d'incision (81) prenant naissance sur la cavité et faisant un angle **A** d'au moins 10 degrés avec une perpendiculaire à la surface de roulement et passant par le point d'intersection de l'incision avec la cavité, de manière à ce que l'incision (80) se ferme au moins à proximité de la cavité (6) afin de réaliser la conservation du volume total **Vc** de ladite cavité (6) pendant le passage de ladite cavité (6) dans le contact avec la chaussée.

2. Pneu selon la revendication 1 **caractérisé en ce que** la première partie (60) d'au moins une cavité (6) formant un résonateur de Helmholtz comprend une partie de cavité (63) orientée dans la direction circonférentielle.

3. Pneu selon la revendication 2 **caractérisé en ce que** la première partie de la cavité (60) comprend, outre une partie sensiblement parallèle à la direction circonférentielle, deux parties sensiblement d'orientation oblique (64', 64") positionnées de part et d'autre de la partie orientée dans la direction circonférentielle (63).

4. Pneu selon l'une des revendications 1 à 3 **caractérisé en ce que** la bande de roulement étant pourvue d'un témoin d'usure (22) dans le fond d'au moins une rainure (2), ce témoin d'usure (22) ayant une hauteur **h** mesuré par rapport au fond de la rainure, chaque cavité (6) formant un résonateur de Helmholtz est située en totalité à une profondeur au moins égale à la profondeur des rainures (2) diminuée de la hauteur h du témoin d'usure.

5. Pneu selon l'une quelconque des revendications 1 à 4 **caractérisé en ce que** l'incision (80) a une largeur moyenne inférieure à 0.6 mn.

## Claims

1. Tyre comprising a crown part extended axially on each side by sidewalls, this crown part comprising a reinforcement made up of a plurality of reinforcing elements embedded in a rubbery material, this reinforcement being radially covered by a tread with a radially outward surface forming a tread surface (11) designed to make contact with the road as the tyre rolls along, this tread comprising a plurality of grooves (2) of generally circumferential orientation and of depth **H,** these grooves (2) defining a plurality of rubber elements (3, 30) arranged in the circumferential direction, at least one rubber element (3, 30) of the tread comprises a plurality of cavities (6), each cavity (6) of volume **Vc** being of generally elongate shape with a total length **Lc** and being designed to communicate with a single groove (2) of generally circumferential orientation, each cavity (6) being extended all the way along its length **Lc** by an incision (80) which extends radially outwardly to emerge at the tread surface (11), this tyre being **characterized in that** these cavities form Helmholtz resonators, each of said cavities comprising a first part (60) of length **L** and of average cross section **S** and a second part (70) forming a channel of length **I** and of cross section **s** less than the average cross section of the first part, this second part (70) being connected to the first part (60) and communicating with a groove, and the volume **Vc** of the cavity being equal to the sum of the volumes of the first part (60) and of the second part (70) and **in that** the incision (80) comprises an incision portion (81) beginning at the cavity and forming an angle **A** of at least 10° with a line perpendicular to the tread surface and passing through the point of intersection of the incision with the cavity, in such a way that the incision (80) closes at least in the vicinity of the cavity (6) in order to preserve the total volume **Vc** of said cavity (6) as said cavity (6) passes through the road contact patch.

2. Tyre according to Claim 1, **characterized in that** the first part (60) of at least a cavity (6) forming a Helmholtz resonator comprises a cavity part (63) oriented in the circumferential direction.

3. Tyre according to Claim 2, **characterized in that** the first part of the cavity (60) comprises, in addition to a part that is generally parallel to the circumferential direction, two parts that are generally of oblique orientation (64', 64") positioned on either side of the part that is oriented in the circumferential direction (63).

4. Tyre according to any one of Claims 1 to 3, **characterized in that** the tread band being provided with at least one wear indicator in the bottom of at least one groove, this wear indicator having a height **h** measured from the bottom of the groove, each cavity (6) forming an Helmholtz resonator is totally situated at a depth at least equal to the depth of the grooves (2) minus the height **h** of the wear indicator.

5. Tyre according to any one of Claims 1 to 4, **characterized in that** the incision (80) has an average width of less than 0.6 mm.

## Patentansprüche

1. Luftreifen, der einen Scheitelbereich aufweist, welcher axial zu beiden Seiten von Flanken verlängert wird, wobei dieser Scheitelbereich eine Verstärkungsbewehrung enthält, die von einer Vielzahl von in ein Kautschukmaterial eingebetteten Verstärkungen gebildet wird, wobei radial über dieser Verstärkungsbewehrung ein Laufstreifen liegt, von dem eine radial äußere Fläche eine Lauffläche (11) bildet und dazu bestimmt ist, während des Rollens des Luftreifens mit der Straße in Kontakt zu kommen, wobei dieser Laufstreifen eine Vielzahl von Rillen mit allgemeiner Umfangsausrichtung (2) und mit einer Tiefe H enthält, wobei diese Rillen (2) eine Vielzahl von Gummielementen (3, 30) begrenzen, die in Umfangsrichtung angeordnet sind, wobei mindestens ein Gummielement (3, 30) des Laufstreifens eine Vielzahl von Hohlräumen (6) enthält, wobei jeder Hohlraum (6) mit einem Volumen Vc eine allgemein längliche Form einer Gesamtlänge Lc hat, die vorgesehen ist, um in einer einzigen Rille (2) einer allgemeinen Umfangsausrichtung zu münden, wobei jeder Hohlraum (6) über seine ganze Länge Lc von einem Einschnitt (80) verlängert wird, der sich radial nach außen erstreckt, um an der Lauffläche (11) zu münden, wobei dieser Luftreifen **dadurch gekennzeichnet ist, dass** diese Hohlräume Helmholtzresonatoren bilden, wobei jeder der Hohlräume einen ersten Bereich (60) mit einer Länge L und mit einem mittleren Querschnitt S und einen zweiten Bereich (70) enthält, der einen Kanal mit einer Länge 1 und mit einem Querschnitt s geringer als der mittlere Querschnitt des ersten Bereichs bildet, wobei dieser zweite Bereich (70) an den ersten Bereich (60) anschließt und in einer Rille mündet, wobei das Volumen Vc des Hohlraums gleich der Summe der Volumen des ersten Bereichs (60) und des zweiten Bereichs (70) ist, und dass der Einschnitt (80) einen Einschnittabschnitt (81) enthält, der am Hohlraum beginnt und einen Winkel A von mindestens 10 Grad mit einer Lotrechten zur Lauffläche und durch den Schnittpunkt des Einschnitts mit dem Hohlraum verlaufend bildet, damit der Einschnitt (80) sich zumindest in der Nähe des Hohlraums (6) schließt, um die Beibehaltung des Gesamtvolumens Vc des Hohlraums (6) während des Übergangs des Hohlraums (6) in den Kontakt mit der Straße zu realisieren.

2. Luftreifen nach Anspruch 1, **dadurch gekennzeichnet, dass** der erste Bereich (60) mindestens eines einen Helmholtzresonator bildenden Hohlraums (6) einen Hohlraumbereich (63) enthält, der in Umfangsrichtung ausgerichtet ist.

3. Luftreifen nach Anspruch 2, **dadurch gekennzeichnet, dass** der erste Bereich (60) des Hohlraums außer einem Bereich im Wesentlichen parallel zur Umfangsrichtung zwei Bereiche mit im Wesentlichen schräger Ausrichtung (64', 64") enthält, die zu beiden Seiten des in Umfangsrichtung ausgerichteten Bereichs (63) positioniert sind.

4. Luftreifen nach einem der Ansprüche 1 bis 3, **dadurch gekennzeichnet, dass**, da der Laufstreifen mit einer Verschleißanzeige (22) am Boden mindestens einer Rille (2) versehen ist, wobei diese Verschleißanzeige (22) eine Höhe h gemessen bezüglich des Bodens der Rille hat, jeder einen Helmholtzresonator bildende Hohlraum (6) vollständig in einer Tiefe angeordnet ist, die mindestens gleich der Tiefe der Rillen (2) verringert um die Höhe h der Verschleißanzeige ist.

5. Luftreifen nach einem der Ansprüche 1 bis 4, **dadurch gekennzeichnet, dass** der Einschnitt (80) eine mittlere Breite von weniger als 0,6 mm hat.
